Europäisches Patentamt

European Patent Office

Office européen des brevets

Publication number: **0 286 807**

**A2**

# EUROPEAN PATENT APPLICATION

Application number: **88102730.4**

Date of filing: **24.02.88**

Int. Cl.⁴: **G06F 9/46**

Priority: **13.04.87 US 37895**

Date of publication of application:
**19.10.88 Bulletin  88/42**

Designated Contracting States:
**DE FR GB**

Applicant: **International Business Machines Corporation**
**Old Orchard Road**
**Armonk, N.Y. 10504(US)**

Inventor: **Obermarck, Ronald Lester**
**584 Marlin Ct.**
**Redwood City California 94065(US)**
Inventor: **Shoens, Kurt Alan**
**7195 Silver Lode Lane**
**San Jose California 95120(US)**

Representative: **Grant, Iain Murray**
**IBM United Kingdom Limited Intellectual**
**Property Department Hursley Park**
**Winchester Hampshire SO21 2JN(GB)**

## Method for regulating access by concurrent transactions to resources.

A method for regulating access by concurrent transactions to hierarchically-related resources distributed about a loosely-coupled multiprocessor system is disclosed. Lock requests are first decided by a local lock manager and then by a central lock manager. When a single local lock manager holds locks on a resource, that local lock manager has sole interest in the resource. While a lock manager has sole interest in a resource, it can acquire locks subsidiary to the resource without consulting with the central lock manager. Sole interests of objects are shifted dynamically for optimising local control of objects, thereby minimising communication and transaction wait time.

FIG. 2

EP 0 286 807 A2

## METHOD FOR REGULATING ACCESS BY CONCURRENT TRANSACTIONS TO RESOURCES

This invention relates to the operation of loosely-coupled multiprocessor syst and provides a lock management method for regulating concurrent accesses to shared system resources by a plurality of transactions executing in one or more central electronic complexes (CECs).

Distributed processing has been widely used in modern multiprocessor systems because it offers improved system availability and modularity (or extensibility). Distributed processing systems range from tightly-coupled to loosely-coupled systems. In tightly-coupled systems, the CECs share a main memory and the control of a single operating system. On the other hand, each CEC in a loosely-coupled system runs on a separate memory and each is controlled by an independent operating system. Communication between CECs in a loosely-coupled system is accomplished by message exchanges in a network to which the CECs are connected.

In loosely-coupled systems, the CECs share access to a common data base. To maintain integrity of the common data base, a transaction running in a CEC is required to first acquire a lock on an object of the data base before it can have access thereto. The locks are controlled by a lock manager which is implemented in either hardware or software.

The lock manager must be efficient, because a transaction usually must acquire and release many locks in each transaction. A lock management scheme that requires a message pair to acquire each lock is too expensive, because it requires both the cost of sending a requesting message and the cost of suspending the transaction until an answering message can be returned to grant the lock. The overhead in process switch and message exchange alone would make such a lock manager consume an order of magnitude more instructions per lock request.

In "VAXclusters: A closely-coupled distributed system", Proceedings of the Tenth ACM Symposium on Operating Systems Principles, Operating Systems Review, Vol. 19, No. 5, December 1985, pp. 1-9, Kronenberg et al disclose a distributed lock manager for controlling access to a resource among loosely-coupled multiprocessors. When a CEC wishes to acquire a lock on a resource, it consults a global directory to see which CEC is handling locks on the resource. If no CEC is handling the locks, the requesting CEC takes the responsibility and adds itself to the global directory. Resources are subdivided into a resource tree. All locking for a single resource is mastered on one CEC --the CEC from which the first lock request was made for the top resource in the tree. Only when the last lock on a resource is released will the CEC relinquish control of the resource and remove its entry from the global directory.

When a CEC holds a lock on a resource that no other CEC holds a lock on, that CEC is the one to have sole interest in the resource. Obviously, a CEC having sole interest in a resource can acquire locks on the resource and its subsidiary without first consulting with other CECs (or the global directory), and without violating the integrity of that resource. In this situation, if control of the resource and its subsidiary are given locally to the CEC, message exchanges and process wait time will be reduced. If, moreover, local control can be optimised by dynamically adjusting the sole interest (or local control) of CECs in resources, additional reduction will be achieved. In not giving local control of resources to individual CECs and not optimising the local control dynamically, Kronenberg et al therefore have not minimised message exchanges and process wait time due to lock requests.

What is needed therefore is a method for maintaining integrity of shared resources that are concurrently accessible by a multiplicity of transactions executing in one or more loosely-coupled CECs, wherein the number of messages that need to be communicated between the complexes is minimised, and wherein the time in which transactions must wait for an access to the resource is also reduced.

The present invention provides a method for regulating access by concurrent transactions to potentially hierarchically-related resources distributed about a loosely-coupled multiple-processor system wherein each resource has a lock associated therewith, and a plurality of transactions are executing each in a respective processor, and a central processor maintaining a concordance of resource identities, hierarchical relations, if any, among the resources and processor identities (IDs), the method comprising, upon receipt of a request from a transaction for access to a resource, the steps of:

(a) ascertaining, at the local processor wherein the requesting transaction is executing whether the local processor has control over the requested resource or its antecedents, the local processor being given control over the resource or its antecedents when the local processor is the only processor accessing the requested resource or its antecedents;

(b) if the local processor has control of the requested resource or its antecedents, granting a lock by the local processor on the requested resource to the requesting transaction if the lock is compatible with a then current combined lock state of the resource; and

(c) if the local processor does not have control of the requested resource, then submitting the resource request to other non-local processors.

There is described hereinafter, a method for regulating access by concurrent transactions to hierarchically-related resources distributed about a loosely-coupled multiprocessor system wherein each resource has a lock associated therewith, and a plurality of transactions each executing in a respective local processor and a central processor maintains a concordance of resource identities, hierarchical relations among the resources, and processor identities (IDs). The method comprises, responsive to a request from a transaction for access to a resource, the steps of: (a) ascertaining at the local processor wherein the requesting transaction is executing whether the local processor has control on the requested resource or its antecedents, the processor having control on the resource or its antecedents when the processor is the only processor accessing the resource or its antecedents; (b) if the local processor has control of the requested resource or its antecedents, granting a lock by the local processor on the requested resource to the requesting transaction if the lock is compatible with a then current combined lock state of the resource; and (c) if the local processor does not have control of the requested resource, then submitting the resource request to other non-local processors.

The present invention will be described further by way of example with reference to one embodiment thereof as illustrated in the accompanying drawings in which:-

Fig. 1 is a diagram which illustrates a loosely-coupled multiprocessor system embodying the method according to this invention; and

Fig. 2 is a logical representation of the multiprocessor system and of a CLM resource table and resource tables in two LLMs.

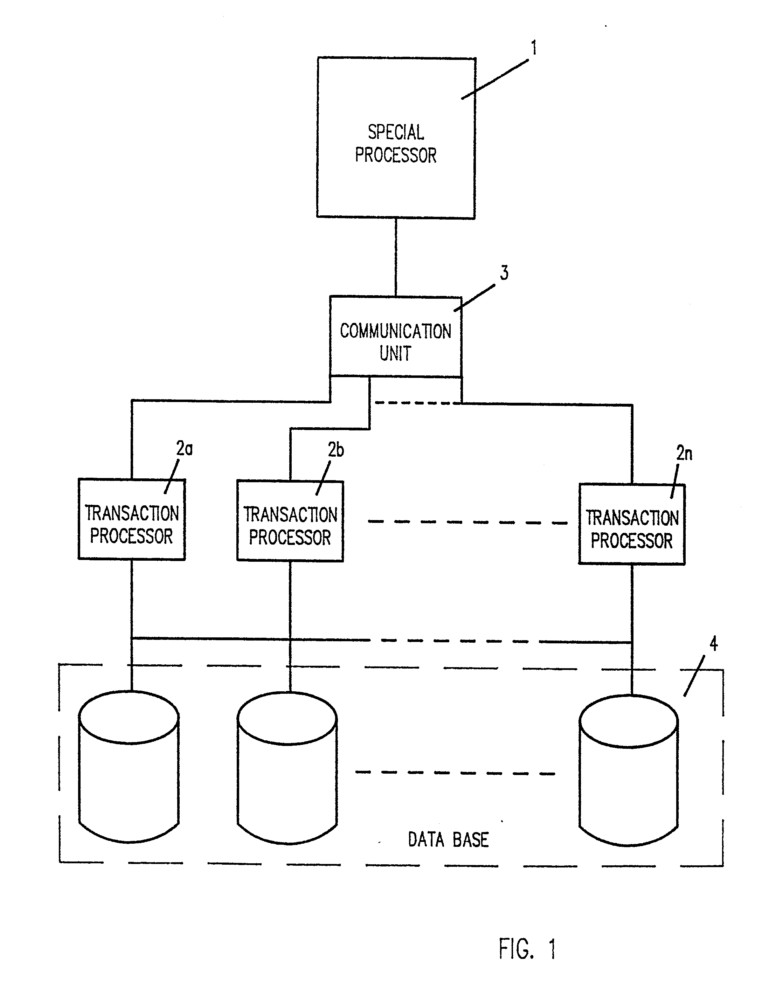

Fig. 1 illustrates a multiprocessor system comprising a plurality of central electronic complexes, $1,2_a,2_b,...,2_n$, such as IBM Systems/370, connected to an IBM 3088 Multisystem Channel Communication Unit 3 in a star network. IBM System/370 is described in U.S. Pat. No. 3,400,371 by G. M. Amdahl, et al, entitled, "Data Processing System" and in the "IBM System/370 Principles of Operation," IBM Publication GA22-7000-6. An IBM 3088 Multisystem Channel Communication Unit product description can be found in IBM Publication GA22-7081-2. Each CEC has a general purpose central processing unit which accesses its own main memory, and also channels for communicating with input/output devices or other peripheral equipment. Each CEC also operates independently under control of an operating system such as the "IBM System/370 Operating System", IBM Publications GS 22-6534, GC 28-0661, and GC 20-1800.

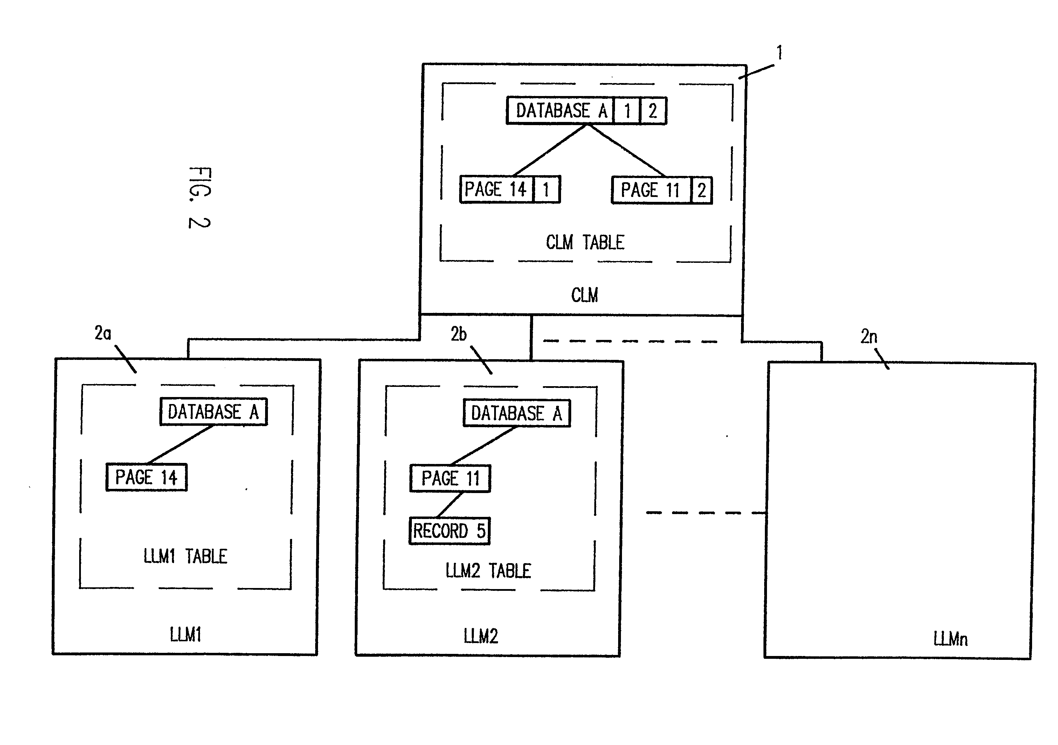

In the multiprocessor system of Fig. 1, CECs $2_a,2_b,...,2_n$ are transaction processors (TPs) each of which is executing transactions which need access to objects of a common data base 4. CECs $2_a,2_b,...,2_n$ are hereafter also referred to as TPa, TPb,...TPn. CEC 1 is a processor which, as will be described hereafter, coordinates accesses to common database 4 by the TP's. The multiprocessor system can therefore also be viewed as a hierarchical system as represented logically in Fig. 2.

To maintain data integrity of the common data base 4, each object of the data base 4 has associated therewith a lock. A transaction must request, and be granted a lock to an object of data base 4 before it can have access to that object.

The locks are arranged in a logical hierarchy. It is required that a transaction acquire a lock on an object's parent before acquiring the lock on the object itself. However, the structuring of objects into a hierarchy does not necessarily imply that the data model supported by the data base system must be hierarchical but that the invention is capable of dealing it if it is.

In this embodiment, the levels of lock hierarchy chosen for data base 4 are:
- Database
- Relation
- Page
- Tuple.

The structures, procedures and other mechanisms are itemised in the following tables:-

3

TABLE 1  -  STRUCTURE OF A RESOURCE NAME ENTRY

```
DECLARE


  1 RNT,
      2 RNTNAME    CHAR(32),     /* Name of resource          */
      2 RNTNEXT    POINTER,      /* Next resource in bucket   */
      2 RNTSIBL    POINTER,      /* Next child                */
      2 RNTPAR     POINTER,      /* Parent of Resource        */
      2 RNTHOLDR   POINTER,      /* List of held locks        */
      2 RNTWAITR   POINTER,      /* List of waiting locks     */
      2 RNTFLAGS,                /* Flag bits...              */
        3 RNTSOLE  BIT(1),       /*   Sole interest           */
        3 RNTFORW  BIT(1),       /*   Sending child locks     */
        3 *        BIT(6),       /*   Reserved                */
```

TABLE 2  -  STRUCTURE OF A WAIT/HOLD QUEUE ENTRY

```
DECLARE


  1 HOW,
      2 HOWNEXT    POINTER,      /* Next lock in list         */
      2 HOWSTATE   FIXED(8),     /* Held or desired state     */
      2 HOWTRAN    FIXED,        /* Transaction ID            */
      2 HOWEVENT   POINTER,      /* Event flag to await       */
      2 HOWFLAGS,                /* Flag bits...              */
        3 HOWISEXT BIT(1),       /*   From other sys          */
        3 HOWWEXT  BIT(1),       /*   Awaits other sys        */
```

TABLE 3  -  STRUCTURE OF A MESSAGE BETWEEN LLM AND CLM

```
DECLARE
    1 MSG
        2 MSGTYPE    FIXED,           /* Message type            */
        2 MSGLOCK    CHAR(32),        /* Lock name               */
        2 MSGPARLK   CHAR(32),        /* Parent's lock name      */
        2 MSGORGLM   FIXED,           /* Original LLM asking     */
        2 MSGHOW     POINTER,         /* Waiting lock            */
        2 MSGRNT     POINTER,         /* For resource            */
        2 MSGPLR     POINTER,         /* Pending lock request    */
        2 MSGFLAG,                    /* Flags...                */
            3 MSGSOLE  BIT(1),        /*    Returned sole interest */
            3 *        BIT(7),        /*    Reserved             */
```

TABLE 4  —  LLM ACTIONS UPON RECEIPT OF LOCK REQUEST

BY A TRANSACTION

```
        Lock(parptr, name)
401       if parptr = NULL
402        & parptr→rntsole = '1'b then
403          sole = true
404       else
405          sole = false
406       R = hash lookup of name
407       if R = NULL then do
408         R = allocate RNT
409         initialise R→RNT with name, parent etc.
410         H = allocate HOW
411         initialise H→HOW with name, desired state, etc.
412         if sole then do
413            CheckLocal(R, H)
414         end
415         else do
416            CheckCLM(R, H)
417         end·
418       end
419       else do
420          H = allocate HOW
421          if sole then do
422            CheckLocal(R, H)
423          end
424          else do
425            CheckCLM(R, H)
426          end
427       end
428     end
```

TABLE 4 — (cont)

```
        Unlock(Name, parptr)
429         R = hash lookup of name
430         if R = NULL then
431             error
432         Remove H from R→rntholder for requestor
433         Free storage for H→HOW
434         Grantlocks (R)
435     end
```

TABLE 5 - PROCEDURE FOR CHECKING COMPATIBILITY OF
A LOCK REQUEST AGAINST LOCAL HOLDERS

```
Checklocal(R, H)

501    compute state = combined state of all holders
502    if R→rntwaitr = NULL & compat(H, state) then
503      add H to R→rntholdr list
504    else do
505      add H to R→rntwaitr list
506      wait for H→howevent
507    end
508  end
```

TABLE 6 - PROCEDURE FOR CHECKING WITH THE CLM
CONCERNING A LOCK

```
CheckCLM(R, H)

601    put H on R→rntwaitr list
602    H→Howwext = '1'b
603    Msg.LockName = R→rntname
604    if R→rntpar = NULL then
605      Msg.LockPar = R→rntpar→rntname
606    Msg.OrgLM = MyID
607    send Msg to the CLM
608    Wait for H→howevent
609  end
```

TABLE 7 — PROCESSING OF LOCK REQUESTS FOR A LOCK FROM
A PROCESS RUNNING ON ANOTHER SYSTEM

RemLock(M)

```
701    RetMsg = M→msg
702    RetMsg→msgtype = MGRANT
703    Set R = Hash lookup of M→msglock
704    if R = NULL then do
705      Send RetMsg to CLM
706      return
707    end
708    H = allocate HOW
709    Initialise H→HOW with name, etc
710    H→howisext = '1'b
711    H→howorglm = M→msgorglm
712    if R→rntsole = '1'b then do
713      R→rntsole = '0'b
714      Send child locks of R to CLM
715      Await acknowledgement from CLM
716    end
717    CheckLocal(R, H)
718    Remove H from R→rntholdr
719    Deallocate H→HOW
720    Send RetMsg to CLM
721  end
```

## TABLE 8  —  CLM ACTIONS ON A LOCK REQUEST

### FROM A LLM

ClmLock(M)

```
801     R = hash lookup of M→msglock
802     p = hash lookup of M→msgparlk
803     if R = NULL then do
804        R = allocate RNT
805        initialise R→RNT
806        H = allocate HOW
807        Initialise H→HOW
808        Add H to R→rntholdr
809        M→msgsole = '1'b
810        M→msgtype = MGRANT
811        Send M to original LLM
812        return
813     end
814     plrptr = allocate PLR
815     M→msgplr = plrptr
816     for each LLM that holds a lock on R,
817        add a PLE to plrptr→plrlist
818     Send M to LLM's in plrptr→plrlist
819  end
```

TABLE 9 - CLM ACTIONS UPON RECEIPT OF AN UNLOCK

REQUEST FROM A CLM

ClmUnlock(M)

```
901    R = hash lookup of M→msglock
902    if R = NULL then
903       return
904    locate H = HOW for requesting LLM
905    remove H from R→rntholdr
906    free H→HOW
907    if 1 HOW left in R→rntholdr then do
908       delete all child RNT's of R
909       send MSOLE msg to remaining LLM
910    end
911    if R→rntholdr is empty then do
912       remove R from hash table
913       free R→RNT
914    end
915 end
```

### TABLE 10 - ACTIONS BY LLM GRANTING ALL THE WAITING LOCKS POSSIBLE FOR A GIVEN RESOURCE

```
GRANTLOCKS(R)

1001    Recompute state = combined state of holders of R→RNT
1002        do    H = R→rntwaitr
1003              while H  = NULL & H→howwext = '0'b & compatible
                  (H→howstate, state)
1004              repeat nexthow
1005              nexthow = H→hownext
1006              Remove H from R→rntwaitr
1007              Put H on R→rntholdr
1008              Signal H→howevent
1009              state = combine(H→howstate, state)
              end
          end
```

### TABLE 11 - ACTION BY CLM UPON RECEIPT OF A LLM MESSAGE GRANT A LOCK

```
ClmGrant(M)

1101        plrptr = M→msgplr
1102        Delete sending LLM from plrptr→plrlist
1103        if plrptr→plrlist now empty then
1104           send M to original LLM
1105        end
```

## TABLE 12 — CODE TO HANDLE GRANTING OF A GLOBAL REQUEST

```
RemGrant(M)

1201    H = M→msghow
1202    R = M→msgrnt
1203    H→howwext = '0'b
1204    call Grantlocks(R)
1205  end
```

## TABLE 13 — CODE TO PROCESS A NOW SOLE INTEREST MESSAGE FROM CLM

```
RemGrant(M)

1301    R = hash lookup of M→msglock
1302    if R = NULL then
1303        R→howwext = '1'b
1304    end
```

## TABLE 14 — ROUTINE WHEN CLM RECEIVES CHILD LOCKS FROM AN LLM

(Child locks are sent when an LLM loses sole interest on a lock.)

```
mChild(M)

1401    Add child locks to table under MSGLOCK
1402    send acknowledgement back to LLM
1403    end
```

Each TP has a Local Lock Manager (LLM) which handles lock requests from local transactions running in that TP. Each LLM has a table in storage that describes all locks held on objects by transactions running in that TP. A format of a table entry for a resource object is illustrated in the pseudo code listing of Table 1.

When a transaction needs access to an object of database 4, it submits a lock request for that object to its LLM. The actions taken by the LLM upon receipt of a lock request are described in the pseudo code listing of Tables 4-6.

13

The LLM locates the parent of the object, and if the parent exists, checks whether it has sole interest in the parent (see lines 401-406 of Appendix).

One of the following three situations can occur when the LLM tries to locate the parent of the object:

(1) The requested object does not have a parent (lines 407-418).

The LLM enters the object into its table and puts the transaction on a queue of waiters for a lock on the object (line 601). The LLM then sends a message to the Central Lock Manager (CLM) requesting the lock on the object (lines 602-607) and instructs the transaction to wait (line 608).

The CLM maintains a table in storage which describes locks held on objects by the various LLM's (on behalf of transactions in their respective CEC). An example of the CLM table is found in Fig. 2. The CLM's table does not contain all locks held in the system. It includes only locks held on objects by more than one LLM and the highest level lock held on an object by an LLM with sole interest. Each CLM table entry indicates the set of LLMs that hold the lock.

Referring now to the pseudo code listing of Table 8, there is listed a routine performed by the CLM upon receipt of a lock request from an LLM. The CLM checks its table for the object (lines 801-802). Depending on the state of the requested object, CLM gives one of the following responses:

(1a) If the object is not present in the CLM's table, the CLM enters it into its table, marks it as sole interest for the requesting LLM and grants the lock on the object to the requesting LLM. In this case the requesting LLM is granted sole interest in the object (lines 803-811). According to a feature of the invention, a lock must be acquired on the parent object before a lock can be acquired on a child object. Hence, when an LLM has sole interest on an object, it also has sole interest on all descendants of the object.

Referring to Table 10, after the LLM receives the lock to the object, it marks the object as sole interest and resumes the transactions. (lines 1003-1008). Resuming a transaction means that the transaction's entry on the waiter queue for the object is moved to the holder queue and the transaction is allowed to continue execution.

(1b) If the object is already in the CLM's table, the CLM sends a message to each of the other LLMs that hold a lock on the object in conflict with the request (lines 812-816). The requesting LLM is added to the list of LLMs that hold locks on the object. When all of the LLMs return messages indicating that they give permission to grant the new lock, the CLM sends a message to the requesting LLM granting the lock and the LLM resumes the transaction.

If at the time of the request, another LLM (say LLM2) had sole interest in the object, the CLM immediately adds the requesting LLM's (say LLM1's) lock to the object. The sole interest held by LLM2 is retained temporarily. During that time, the CLM requests that LLM2 send the CLM any locks held on objects directly below the sole interest object. The new objects are, as described previously, sole interest to LLM2. When all directly subsidiary locks have been forwarded to the CLM by LLM2, LLM2's sole interest in the original object is dropped. The actions performed by an LLM upon a lock request from a remote system is listed in Table 7. In this way, the sole interest of LLM2 on the resource is dynamically adjusted and, consequently, local control of the system is optimised.

Consider, by way of example, a situation illustrated in Fig. 2. Assuming first that LLM2 has access to Record 5 of Page 11 of Database A. Assuming further that when LLM2 was granted a lock on Record 5, it was the first and only LLM that had access to Database A. Thus a sole interest on Database A was granted to LLM2 (and accordingly descendants of Database A, i.e. Page 11, Page 14, and Record 5).

When LLM1 needs access to page 14 of database A, it sends a lock request to the CLM. While the CLM adds LLM1's lock to database A, the sole interest to database A is retained in LLM2. The CLM requests LLM2 to send the CLM any locks held on objects directly below database A (i.e. Page 11).

Page 11 is now marked in the CLM table sole interest to LLM2. When sole interest to page 11 is registered in the CLM as belonging to LLM2, LLM2's sole interest in database A is dropped.

(1c) The lock on the object cannot be granted due to the failure of another LLM.

The transaction is awakened and notified that the request failed. The object is removed from the LLM's table.

(2) The requested object is in the LLM's table but the LLM does not have sole interest in the parent of the object.

The LLM appends the transaction's request to the waiter queue for the object, suspends the transaction, and forwards the request to the CLM via a message. The possible CLM response and associated LLM actions are nearly the same as for the previous case except that when the CLM grants the lock to the LLM there may be other transactions, running on the same complex as the requesting transaction, that hold locks on the object in conflict with the request. In that case, the requesting transaction remains queued behind the local transactions until they release their locks on the object.

(3) The LLM has sole interest in the parent of the object (See Table 5)

In this case, the LLM has control of the object and need not communicate with the CLM. The transaction is kept on the waiter queue until other local transactions that are holding conflicting locks on the object release their locks.

The LLMs must respond to both local transaction requests and to remote requests from the CLM. Table 7 is a pseudo code listing of the LLM routine executed upon receipt of a lock request from a transaction on a remote system. When an LLM receives a remote request from the CLM, it checks its table for the object involved. If its table does not contain the object, a message granting the lock is returned to the CLM immediately (lines 704-707) and a corresponding table entry is built for the resource.

In Table 7 there is also shown the situation when the LLM has sole interest of the requested resource. In this case, the LLM would relinquish the sole interest. The LLM also sends locks on descendants of the resource back to the CLM (lines 712-715).

If the LLM's table does contain the object, the request is checked for compatibility against local current holders and waiters for the lock (line 717). If the request is compatible, a message granting the lock is returned to the CLM immediately. Otherwise, the request is queued behind any other waiting lock requests for the object until the request can be granted (when other transactions release locks on the object), then a message is returned to the CLM granting the lock.

When a transaction releases a lock on an object, the LLM examines the queue of waiters to see if any new holders can be accommodated. If so, as many new waiters as are compatible are added to the holder queue, if they are local. Compatible waiters that are remote cause a message to be sent to the CLM granting the request. When the last lock on an object is released on an LLM, a message is sent to the CLM to release the lock. Table 9 is a pseudo code listing of the CLM routine upon an unlock request from an LLM. The CLM removes the LLM from the list of lock holders for the object. If only one LLM now remains holding locks on the object, a message ("now sole interest") is sent to that LLM giving it sole interest. CLM further deletes all objects beneath the now sole interest object in its table.

When the remaining LLM receives a message from CLM granting sole interest on an object, it marks the corresponding table entry accordingly, thus maximising its local control of the resource.

Although this invention has been particularly shown and described with reference to a preferred embodiment thereof, it will be understood by those skilled in the art that various changes in form and details may be made therein without departing from the scope of the appended claims.

## Claims

1. A method for regulating access by concurrent transactions to potentially hierarchically-related resources distributed about a loosely-coupled multiple-processor system wherein each resource has a lock associated therewith, and a plurality of transactions are executing each in a respective processor, and a central processor maintaining a concordance of resource identities, hierarchical relations, if any, among the resources and processor identities (IDs), the method comprising, upon receipt of a request from a transaction for access to a resource, the steps of:

(a) ascertaining, at the local processor wherein the requesting transaction is executing whether the local processor has control over the requested resource or its antecedents, the local processor being given control over the resource or its antecedents when the local processor is the only processor accessing the requested resource or its antecedents;

(b) if the local processor has control of the requested resource or its antecedents, granting a lock by the local processor on the requested resource to the requesting transaction if the lock is compatible with a then current combined lock state of the resource; and

(c) if the local processor does not have control of the requested resource, then submitting the resource request to other non-local processors.

2. A method as claimed in claim 1, wherein each non-local processor is responsive to a received request, to execute the further steps of:

(i) granting a lock on the requested resource or its antecedent if the resource or its antecedent is not locked; and

(ii) either granting a compatible lock where a lock exists or forcing the requesting transaction into a wait state.

3. A method as claimed in claim 1 or claim 2, wherein each local processor updates the central processor's concordance as to the set of resources and the hierarchic span with which it is associated.

4. A method as claimed in claim 1 or claim 2, wherein control of a resource and its descendants is dynamically given to a processor at the highest hierarchical level if the processor is the only processor accessing the resource.

5. A method as claimed in claim 4, wherein, if a first processor is having control of a resource at a first level and a second processor is requesting to share access to the resource at the first level, the first processor's control in the resource is degraded to a descendant lower than the first level of the resource if such degradation is compatible with the then current combined lock state of the resource in the first processor.

6. A method as claimed in claim 5, wherein, if all other processors no longer share access to a resource and its descendants at a second level, a remaining processor's control of the resource is upgraded to the second level.

FIG. 1

FIG. 2